# EUROPÄISCHE PATENTSCHRIFT

(11) **EP 2 033 870 B1**
(45) Veröffentlichungstag und Bekanntmachung des Hinweises auf die Patenterteilung: **26.10.2011**
(21) Anmeldenummer: 08015216.8
(22) Anmeldetag: 28.08.2008
(51) Int. Cl.: B61D 23/02, B60R 3/02, A61G 3/06

(54) **Schiebetritt für Schienenfahrzeuge**
Retractable step for railway vehicles
Pédale coulissante pour véhicules ferroviaires

(30) Priorität: 06.09.2007 DE 102007044186
(43) Veröffentlichungstag der Anmeldung: 11.03.2009
(73) Patentinhaber: Dowaldwerke GmbH, 28199 Bremen (DE)
(72) Erfinder: Börner, Harald, 01723 Grumbach (DE); Heimer, Jörg, 01219 Dresden (DE)
(74) Vertreter: Pfenning, Meinig & Partner GbR

(56) Entgegenhaltungen:
- EP-A- 1 470 959
- EP-A- 1 787 612

## Beschreibung

Die Erfindung betrifft einen Schiebetritt für Schienenfahrzeuge, wobei solche Schiebetritte für ein erleichtertes Ein- und Aussteigen von Passagieren und dabei insbesondere für eine behindertengerechte Ausgestaltung von Einstiegen an Schienenfahrzeugen vorgesehen sind. Mit Schiebetritten kann eine Überbrückung des Spalts vom Boden eines Eingangsbereichs eines Schienenfahrzeugs zu einem Bahnsteig erreicht werden. Dabei sind an solchen Schiebetritten Trittplatten vorhanden, die während der Fahrt unterhalb des Schienenfahrzeugbodens in eingefahrenem Zustand angeordnet sind und dann bei Bedarf mittels eines Antriebs eine solche Trittplatte horizontal senkrecht zur Fahrtrichtung so verschoben werden kann, dass sie über die Breite des jeweiligen Schienenfahrzeugs hinausgeführt ist, und dadurch der Spalt zwischen der äußeren Kante eines Einstiegsbereichs eines Schienenfahrzeugs und dem jeweiligen Bahnsteig mit der Trittplatte überbrückt werden kann. Vor der Abfahrt des jeweiligen Schienenfahrzeugs, also vor dem Verlassen eines Bahnsteigs, werden solche Trittplatten durch den jeweiligen Antrieb wieder in ihre Ausgangsstellung zurückbewegt, so dass sie dann unterhalb des Fahrzeugbodens bzw. auch im Bereich des Fahrzeugbodens angeordnet sind und nicht mehr über die Breite des jeweiligen Schienenfahrzeugs hinausragen und dadurch kein Gefahrenpotential während der Fahrt durch eine überstehende Trittplatte besteht.

So ist es bisher üblich, unter Berücksichtigung eines Sicherheitsaspekts an solchen Schiebetritten Sicherheitseinrichtungen vorzusehen, mit denen beim Ausfahren von Trittplatten Beschädigungen an Gegenständen, dem Schiebetritt oder einer Verletzung von Fahrgästen, die sich auf Bahnsteigen befinden, verhindert werden kann.

Hierzu sind entsprechende Sensoren eingesetzt worden, um bei einem Herausschieben von Trittplatten diesen Vorgang abzubrechen, wenn eine solche Trittplatte in unerwünschter Form gegen einen Gegenstand oder einen Fahrgast stößt.

Eine solche technische Lösung ist beispielsweise in EP 1 610 994 B1 offenbart.

Bei den in Rede stehenden Schiebetritten ist aber auch ein weiteres Problem zu berücksichtigen. So darf eine Trittplatte durch einen Antrieb nicht in ihre Ausgangsposition zurückbewegt werden, wenn die Trittplatte noch belastet ist, was beispielsweise durch darauf abgestellte Gepäckstücke und insbesondere durch noch auf ausgefahrenen Trittplatten stehende Fahrgäste der Fall ist.

Aus EP 1 787 612 A2 ist eine bewegliche Trittplatte bekannt, bei der vertikal und/oder horizontal wirkende Störkräfte mit mindestens einem Sensor erfasst werden sollen. Dabei soll wenigstens ein Dehnungsmessstreifen an einem stationären, bei der Bewegung der Trittplatte nicht bewegten Teil angebracht sein.

Es ist daher Aufgabe der Erfindung, eine Möglichkeit zu schaffen, mit der eine unerwünschte Bewegung einer Trittplatte eines Schiebetritts im ausgefahrenen Zustand verhindert werden kann, wenn die Trittplatte vertikal von oben mit einer Last beaufschlagt ist.

Erfindungsgemäß wird diese Aufgabe mit einem Schiebetritt, der die Merkmale des Anspruchs 1 aufweist, gelöst.

Vorteilhafte Ausgestaltungsformen und Weiterbildungen der Erfindung können mit in untergeordneten Ansprüchen bezeichneten Merkmalen erreicht werden.

Ein erfindungsgemäßer Schiebetritt für Schienenfahrzeuge ist dabei so ausgebildet, dass unterhalb eines Fahrzeugbodens im Türbereich eine verschiebbare Trittplatte mittels zweier Auflagesockel gehalten ist. Dabei ist eine solche verschiebbare Trittplatte über Führungen, die in unterschiedlichster Form ausgebildet sein können, gehalten. So können an beiden Seiten einer solchen Trittplatte beispielsweise geeignete Führungen für mehrere Rollen vorhanden sein, so dass eine Verschiebung der Trittplatte bei Erreichen eines Bahnsteigs und dann wieder bei Bedarf mit einem geeigneten Antrieb so verschoben werden kann, wie es im einleitenden Teil der Beschreibung bereits erläutert worden ist. Die beiden parallel zueinander und parallel zu den Außenkanten einer Trittplatte ausgerichteten Auflagesockel können so fest mit dem Fahrzeugrahmen oder Wagenkasten verbunden sein.

Die Fixierung und Führung der Trittplatte kann aber auch so ausgebildet sein, dass Laufschienen am Fahrzeugrahmen oder einem Wagenkasten befestigt sind. Mit denen über Rollen eine Führung und/oder Auflagesockel verschiebbar gelagert sind, so dass auch der Auflagesockel mit Trittplatte bei einem Ausfahren horizontal und senkrecht zur Fahrtrichtung verschoben werden können.

Erfindungsgemäß ist mindestens an einem der Auflagesockel, einer Führung oder der Trittplatte eine Messkammer vorhanden oder daran ausgebildet. An der einen ggf. aber auch zwei Messkammern, die dann jeweils an einem Auflagesockel, einer Führung oder der Trittplatte vorhanden oder ausgebildet sind, ist wiederum mindestens ein Scherkräfte messender Sensor angeordnet.

An einer Messkammer ist wiederum ein vertikal ausgerichtetes Stegelement vorhanden oder dort ausgebildet, an dem der eine oder auch mehrere Sensor(en) angeordnet ist/sind.

In einer bevorzugten Ausführungsform eines erfindungsgemäßen Schiebetritts sind aber zwei Sensoren an beiden Seiten des Stegelements, sich symmetrisch zueinander gegenüberliegend, angeordnet.

Bevorzugte Scherkräfte messende Sensoren sind dabei Dehnungsmessstreifen, die in an sich bekannter Ausführung auf eine Oberfläche von Stegelementen aufgeklebt werden können.

Sensoren und insbesondere Dehnungsmessstreifen können dann mit einer elektronischen Steuerung für den Antrieb der Trittplatte eines Schiebetritts elektrisch leitend verbunden sein, so dass dann die Möglichkeit besteht, bei einer Detektion einer einen vorgegebenen Schwellwert überschreitenden Scherkraft oder einer gemittelten Summe mehrerer mit Sensoren detektierter Scherkräfte eine Abschaltung des Antriebs für die Bewegung der Trittplatte zwangsläufig einzuleiten. Dadurch kann eine Weiterbewegung der Trittplatte verhindert werden, wenn Gegenstände oder Personen die Trittplatte mit einer entsprechenden Kraft, die vertikal von oben nach unten gerichtet ist, belasten.

Allein oder zusätzlich kann dabei auch ein Warnsignal generiert werden. Mit einem solchen Signal, das optisch und/oder auch akustisch sein kann, können beispielsweise Fahrgäste gewarnt und zum Verlassen der Trittplatte bewegt werden.

Nach dem Entfernen von auf Trittplatten abgestellten Gegenständen oder dem Verlassen von Fahrgästen, die vorab auf einer Trittplatte gestanden haben, werden dann mit dem einen oder auch mehreren Sensor(en) deutlich kleinere Scherkräfte detektiert, so dass der Antrieb für eine Trittplatte über die elektronische Steuerung wieder freigeschaltet werden kann.

Eine elektronische Steuerung für Schiebetritte kann außerdem mit einer elektrischen Steuerung für das gesamte Schienenfahrzeug und/oder dem Führerstand des jeweiligen Schienenfahrzeugs verbunden sein, so dass gleichzeitig auch eine Abfahrt des Schienenfahrzeugs bei noch ausgefahrener Trittplatte verhindert werden kann.

Für eine Ausbildung von Messkammern an Auflagesockeln, Führungen oder einer Trittplatte mit den Stegelementen bestehen mehrere Möglichkeiten.

So kann ein metallisches Profil, das bevorzugt aus einem MoCr-Edelstahl hergestellt worden ist, spanend so bearbeitet werden, dass im Bereich der Messkammer ein Doppel-T-Profil ausgebildet wird und dabei das Stegelement die vertikale Verbindung bildet. Es liegt auf der Hand, dass durch einen solchen spanenden Werkstoffabtrag im Bereich des Stegelements auch das mechanische Widerstandsmoment beispielsweise eines Auflagesockels reduziert und so dort bei gleich wirkenden Kräften oder Momenten eine größere Verformung zu verzeichnen ist, als im ungeschwächten Bereich von Auflagesockeln.

Der spanende Werkstoffabtrag kann dabei so erfolgen, dass an einer Seite oder an zwei Seiten eines Auflagesockels Aussparungen ausgebildet werden, deren Ränder in unterschiedlichster Randkontur, beispielsweise quadratisch, rechteckig oder auch kreisförmig, ausgebildet sein kann.

In ähnlicher Form besteht aber auch die Möglichkeit, an einem Auflagesockel, einer Führung oder der Trittplatte Aufnahmen auszubilden, die dann eine Durchbrechung von einer Seite bis zur gegenüberliegenden Seite bilden. In eine solche Durchbrechung kann dann wiederum ein passendes Doppel-T-Profil eingesetzt werden. Ein solches Doppel-T-Profil kann dann in der Aufnahme stoff-, form- und/oder kraftschlüssig aufgenommen sein, wobei eine möglichst innige Befestigung eines solchen Doppel-T-Profils in der Aufnahme des Auflagesockels erreicht werden soll. Dies kann beispielsweise mittels einer Schweiß- oder Pressverbindung erreicht werden. Dabei besteht die Möglichkeit, bereits vorab an einem solchen Doppel-T-Profil die jeweiligen Sensoren anzubringen.

Die jeweiligen Sensoren, also bevorzugt Dehnungsmessstreifen, können in unterschiedlichster Form miteinander verschaltet werden, um die mit ihnen erfassten Messsignale in geeigneter Form verarbeiten zu können.

So besteht die Möglichkeit, zwei Sensoren an einer Messkammer, die an beiden Seiten eines Stegelements angeordnet sind, so miteinander zu verschalten, dass Sie eine Wheatstone-Messbrückenschaltung bilden.

Bei einer Ausführungsform, bei der an beiden Auflagesockeln oder Führungen Messkammern oder zwei Messkammern an einer Trittplatte mit jeweils zwei solcher Sensoren vorhanden sind, kann die Verschaltung so erfolgen, dass die analogen Messsignale oder daraus digitalisierte Werte einer Mittelwertbildung unterzogen werden und der so erhaltene Mittelwert berücksichtigt wird.

Insbesondere bei einer Ausführungsform eines erfindungsgemäßen Schiebetritts mit an beiden Auflagesockeln oder Führungen ausgebildeten Messkammern mit Sensoren kann erreicht werden, dass eine Detektion einer vorgegebene Schwellwerte überschreitenden Scherkraft unabhängig vom Ort der Krafteinleitung auf der Trittplatte erfolgen kann. Demzufolge kann eine gesicherte Abschaltung eines Antriebs für Trittplatten bei einer auf eine Trittplatte wirkenden Kraft von mindestens 80 N erreicht werden, egal an welcher Position der Trittplatte die Kraftwirkung erfolgt.

Beispielsweise mit einem elektronischen Potentiometer, das Bestandteil der elektronischen Steuerung sein kann, ist eine selbsttätige Kalibrierung möglich. Dies wirkt sich insbesondere dann vorteilhaft aus, wenn Kräfte im eingefahrenen Zustand der Trittplatte infolge von Verspannungen durch Fahrzeugrahmen oder Wagenkastenverbindungen aufgetreten sind und dann das jeweilige Signal der Sensoren durch eine parallele Verschiebung der jeweiligen Sensorkennlinien auf einen Basiswert, der keiner Kraftwirkung auf eine Trittplatte entspricht, erreicht werden kann.

Bei einem erfindungsgemäßen Schiebetritt sollte die eine oder auch mehrere Messkammer(n) mit dem jeweiligen Stegelement symmetrisch in Bezug zur Längsachse eines Auflagesockels in dessen Mitte angeordnet sein. Die Anbringung der jeweiligen Sensoren sollte in der Mitte eines Stegelements in Bezug zu seiner jeweiligen Höhe erfolgen.

Die Messkammern mit Stegelement sollten so unter Berücksichtigung der Festigkeit des Werkstoffs aus dem Auflagesockel bzw. ein in einer Aufnahme eingesetztes Doppel-T-Profil, so dimensioniert sein, dass für die Bestimmung der Scherkräfte eine messbare Verformung an Stegelementen erfolgen kann, die 30 bis 50 µm/m entspricht.

Nachfolgend soll die Erfindung beispielhaft näher erläutert werden.

Dabei zeigen:
- Figur 1: in einer Seitenansicht einen Teil eines Beispiels einer erfindungsgemäßen Ausführungsform eines Schiebetritts und
- Figur 2: eine Schnittdarstellung entlang der Linie A-A aus Figur 1, wobei im Schnitt eine mögliche Ausbildung einer Messkammer verdeutlicht ist.

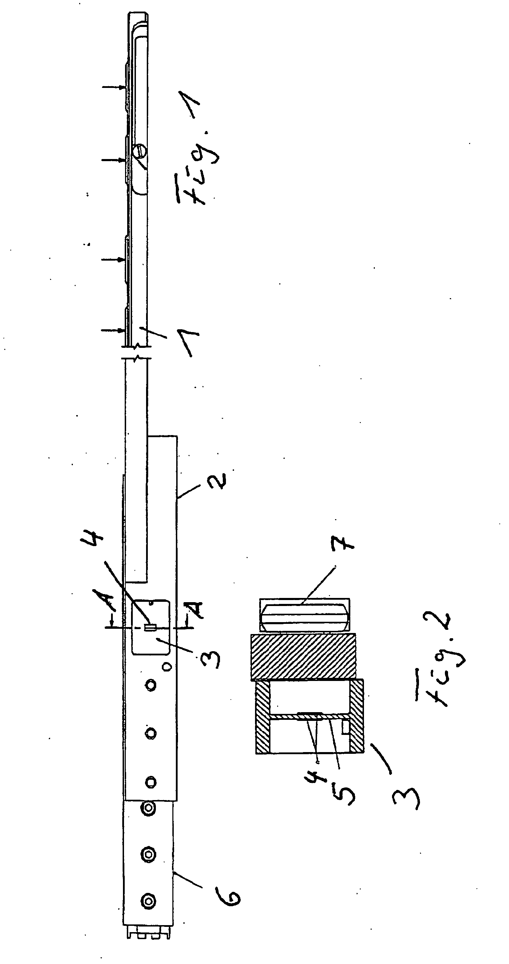

Mit der in Figur 1 gezeigten Seitenansicht soll insbesondere die Anordnung einer Messkammer 3 an einem Auflagesockel 2 eines Beispiels eines erfindungsgemäßen Schiebetritts, bei einer über eine Fahrzeugseite herausgeschobenen Trittplatte 1 verdeutlicht werden.

In Figur 1 ist nicht dargestellt, wie der Auflagesockel 2 an einem Fahrzeugrahmen eines Schienenfahrzeugs oder einem Wagenkasten befestigt ist. Am Auflagesockel 2 ist eine Rollenaufnahme 6 mit Rollen 7, als ein Beispiel für eine Führung befestigt, wobei dies bei diesem Beispiel mit Schraubverbindungen 8 erreicht werden kann. Die Rollen 7 erleichtern die Verschiebung der Trittplatte 1.

Wie aus Figur 1 hervorgeht, ist eine Messkammer 3 am Auflagesockel 2 mit rechteckförmiger äußerer Randkontur durch eine spanende Bearbeitung ausgebildet worden.

Dabei ergibt sich im Bereich der Messkammer 3 ein Querschnittsprofil, wie es mit Figur 2 verdeutlicht ist. Eine Messkammer 3 hat demzufolge ein Doppel-T-förmiges Querschnittsprofil mit einem vertikal ausgerichteten Stegelement 5, das sich bei auf eine Trittplatte 1 wirkenden Kräften, wie dies in Figur 1 mit vertikal von oben nach unten gerichteten Pfeilen angedeutet ist, verformen kann.

Eine solche Scherkraftmessung kann dann mit den Dehnungsmessstreifen, als Sensoren 4, die bei diesem Beispiel symmetrisch sich gegenüberliegend am Stegelement 5 befestigt sind, detektiert werden, wobei die Signalübertragung von den Dehnungsmessstreifen, als Sensoren 4, wie vorab im allgemeinen Teil der Beschreibung erläutert, für eine sinnvolle Auswertung der Signale erfolgen kann.

Wie auch Figur 1 entnommen werden kann, ist dabei eine Messkammer 3 in der Mitte eines Auflagesockels 2 in Bezug zu dessen Längsachse, also auch in Achsrichtung der Verschiebung einer Trittplatte 1, angeordnet.

Auch die Dehnungsmessstreifen als Sensoren 4 sind hier in der Mitte des Stegelements 5 in Bezug zur Höhe des Stegelements 5 und der dabei möglichst auch in der Mitte, also im Flächenschwerpunkt der Messkammer 3 bzw. eines daran vorhandenen oder ausgebildeten Stegelements 5 angebracht.

## Patentansprüche

1. Schiebetritt für Schienenfahrzeuge, bei dem unterhalb eines Fahrzeugbodens im Türbereich eine Trittplatte (1) mittels zweier Auflagesockel (2) gehalten ist und mit Führungen (6, 7) horizontal senkrecht zur Fahrtrichtung verschiebbar ist, dabei an mindestens einem Auflagesockel (2), der Trittplatte (1) oder einer Führung (6, 7) eine Messkammer (3) vorhanden oder daran ausgebildet ist und an der Messkammer (3) mindestens ein Scherkräfte messender Sensor (4) angeordnet ist; und an der Messkammer (3) ein vertikal ausgerichtetes Stegelement (5) vorhanden oder dort ausgebildet ist, an dem der/die Sensor(en) (4) angeordnet ist/sind, **dadurch gekennzeichnet, dass** zwei Sensoren (4) an beiden Seiten des Stegelements (5) angeordnet sind und
das/die Stegelement(e) (5) unmittelbar am/an Auflagesockel (n) (2), der Führung (en) (6, 7) oder der Trittplatte (1) ausgebildet ist/sind und/oder
ein Stegelement (5) an einem Doppel-T-Profil ausgebildet ist, das in eine in einem Auflagesockel (2), der Führung (6, 7) oder der Trittplatte (1) ausgebildete Aufnahme stoff-, form- und/oder kraftschlüssig aufgenommen ist.

2. Schiebetritt nach Anspruch 1, **dadurch gekennzeichnet, dass** die zwei Sensoren (4) an beiden Seiten des Stegelements (5) symmetrisch zueinander angeordnet sind.

3. Schiebetritt nach Anspruch 1 oder 2, **dadurch gekennzeichnet, dass** Messkammern (3) an beiden Auflagesockeln (2) oder Führungen (6, 7) vorhanden oder daran ausgebildet sind.

4. Schiebetritt nach einem der vorhergehenden Ansprüche, **dadurch gekennzeichnet, dass** der/die Sensor(en) (4) als Dehnungsmessstreifen ausgebildet ist/sind.

5. Schiebetritt nach einem der vorhergehenden Ansprüche, **dadurch gekennzeichnet, dass** der/die Sensor(en) (4) an eine elektronische Steuerung für einen Antrieb der Trittplatte (1) angeschlossen ist/sind.

6. Schiebetritt nach einem der vorhergehenden Ansprüche, **dadurch gekennzeichnet, dass** bei einer Detektion einer einen vorgegebenen Schwellwert überschreitenden Scherkraft oder einer gemittelten Summe mehrerer mit Sensoren (4) detektierter Scherkräfte eine Abschaltung des Antriebs für die Bewegung der Trittplatte (1) und/oder ein Signal generierbar ist.

7. Schiebetritt nach einem der vorhergehenden Ansprüche, **dadurch gekennzeichnet, dass** bei einer Detektion einer einen vorgegebenen Schwellwert überschreitenden Scherkraft oder einer gemittelten Summe mehrerer mit Sensoren (4) detektierter Scherkräfte ein optisches und/oder akustisches Warnsignal generierbar ist.

8. Schiebetritt nach einem der vorhergehenden Ansprüche, **dadurch gekennzeichnet, dass** ein elektronisches Potentiometer, für eine selbsttätige Kalibrierung, Bestandteil der elektronischen Steuerung ist.

9. Schiebetritt nach einem der vorhergehenden Ansprüche, **dadurch gekennzeichnet, dass** die Messkammer(n) (3) mit Stegelement (5) mittig in Bezug zur Längsachse des/der Auflagesockel (2) oder der Führung(en) (6, 7) angeordnet ist/sind.

10. Schiebetritt nach einem der vorhergehenden Ansprüche, **dadurch gekennzeichnet, dass** der/die Sensor(en) (4) in der Mitte eines Stegelementes (5) in Bezug zu dessen vertikaler Höhe angeordnet ist/sind.

## Claims

1. Retractable step for railway vehicles in which a step plate (1) is held below a vehicle floor in the door region by means of two support bases (2) and is displaceable horizontally perpendicular to the direction of travel using guide means (6, 7), a measuring chamber (3) being present on or formed on at least a support base (2), the step plate (1) or a guide means (6, 7), and at least one shear stress sensor (4) being arranged on the measuring chamber (3); and a vertically orientated web element (5) being present or formed on the measuring chamber (3), on which web element the sensor(s) (4) is/are arranged, **characterised in that** two sensors (4) are arranged on the two sides of the web element (5) and the web element(s) (5) is/are formed directly on the support base(s) (2), the guide means (6, 7) or the step plate (1) and/or a web element (5) is formed on a double-T profile which is accommodated with full material cohesion, positive locking and/or non-positive locking in a recess which is formed in a support base (2), the guide means (6, 7) or the step plate (1).

2. Retractable step according to claim 1, **characterised in that** the two sensors (4) are arranged symmetrically to one another on the two sides of the web element (5).

3. Retractable step according to either claim 1 or claim 2, **characterised in that** measuring chambers (3) are present or formed on the two support bases (2) or guide means (6, 7).

4. Retractable step according to any one of the preceding claims, **characterised in that** the sensor(s) (4) is/are formed as strain gauges.

5. Retractable step according to any one of the preceding claims, **characterised in that** the sensor(s) (4) is/are connected to an electronic control unit for a drive of the step plate (1).

6. Retractable step according to any one of the preceding claims, **characterised in that** the drive for moving the step plate (1) can be shut off and/or a signal can be generated when a shear force which is above a predetermined threshold or an averaged total of a plurality of shear forces detected by sensors (4) is detected.

7. Retractable step according to any one of the preceding claims, **characterised in that** a visual and/or audible warning signal can be generated when a shear force which is above a predetermined threshold value or an averaged total of a plurality of shear forces detected by sensors (4) is detected.

8. Retractable step according to any one of the preceding claims, **characterised in that** an electronic potentiometer for automatic calibration is a component of the electronic control unit.

9. Retractable step according to any one of the preceding claims, **characterised in that** the measuring chamber(s) (3) with web element (5) is/are arranged centrally based on the longitudinal axis of the support base(s) (2) or the guide means (6, 7).

10. Retractable step according to any one of the preceding claims, **characterised in that** the sensor(s) (4) is/are arranged in the centre of a web element (5) based on the vertical height thereof.

## Revendications

1. Marchepied coulissant pour véhicules ferroviaires, dans lequel, en dessous du plancher de véhicule, dans la zone de la porte, un plateau de marche-pied (1) est maintenu au moyen de deux socles d'appui (2) et peut être déplacé horizontalement à l'aide de coulisses (6, 7) disposées perpendiculairement à la direction de marche, une chambre de mesure (3) étant présente ou formée sur au moins un socle d'appui (2), sur le plateau de marchepied (1) ou une coulisse (6, 7), un capteur (4) de mesure des forces de cisaillement étant agencé au niveau de la chambre de mesure (3), et un moyen de traverse (5) orienté verticalement étant disposé ou formé dans la chambre de mesure (3), le ou les capteurs (4) étant agencés sur le moyen de traverse, **caractérisé en ce que** deux capteurs (4) sont aménagés sur les deux côtés du moyen de traverse (5) et **en ce que**
le ou les moyens de traverse (5) est ou sont formés directement sur le ou les socles d'appui (2), la ou les coulisses (6, 7) ou le plateau de marchepied (1) et/ou
un moyen de traverse (5) est formé par un profilé en T double, qui est reçu par assemblage matériel, par adaptation de forme et/ou par adhérence dans un logement formé dans un socle d'appui (2), la coulisse (6, 7) ou le plateau de marchepied (1).

2. Marchepied coulissant selon la revendication 1, **caractérisé en ce que** les deux capteurs (4) sont agencés symétriquement l'un à l'autre des deux côtés du moyen de traverse (5).

3. Marchepied coulissant selon la revendication 1 ou 2, **caractérisé en ce que** des chambres de mesure (3) sont disposées ou formées sur les deux socles d'appui (2) ou les deux coulisses (6, 7).

4. Marchepied coulissant selon l'une quelconque des revendications précédentes, **caractérisé en ce que** le ou les capteurs (4) sont une ou des jauge(s) de contrainte.

5. Marchepied coulissant selon l'une quelconque des revendications précédentes, **caractérisé en ce que** le ou les capteurs (4) est ou sont connectés à une commande électronique pilotant le déplacement du plateau de marchepied (1).

6. Marchepied coulissant selon l'une quelconque des revendications précédentes, **caractérisé en ce que**, lors d'une détection d'une force de cisaillement dépassant une valeur de seuil prédéfinie ou d'une somme moyenne de plusieurs forces de cisaillement détectées par les capteurs (4), il peut être généré une désactivation de l'entraînement du déplacement du plateau de marchepied (1) et/ou un signal.

7. Marchepied coulissant selon l'une quelconque des revendications précédentes, **caractérisé en ce que**, lors d'une détection d'une force de cisaillement dépassant une valeur de seuil prédéfinie ou d'une somme moyenne de plusieurs forces de cisaillement détectées par les capteurs (4), il peut être généré un signal d'avertissement optique et/ou acoustique.

8. Marchepied coulissant selon l'une quelconque des revendications précédentes, **caractérisé en ce qu'**un potentiomètre électronique, destiné à un étalonnage automatique, appartient à la commande électronique.

9. Marchepied coulissant selon l'une quelconque des revendications précédentes, **caractérisé en ce que** la ou les chambres de mesure (3) est ou sont agencées avec un moyen de traverse (5) au centre, par rapport à l'axe longitudinal, du ou des socles d'appui (2) ou de la ou des coulisses (6, 7).

10. Marchepied coulissant selon l'une quelconque des revendications précédentes, **caractérisé en ce que** le ou les capteurs est ou sont agencés au centre d'un moyen de traverse (5) par rapport à sa hauteur verticale.
